# EUROPEAN PATENT APPLICATION

(11) **EP 4 628 830 A1**
(43) Date of publication of application: **08.10.2025**
(21) Application number: 24275037.0
(22) Date of filing: 02.04.2024
(51) Int. Cl.: F41G 3/02, F41G 7/22, F41H 11/02, G01S 7/38, G01S 13/00, G01S 13/06, G01S 17/10, G01S 17/86, G01S 19/01, H04K 3/00

(54) **GROUND-BASED AIR DEFENCE SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a ground-based air defence system comprising: a detection system configured to detect a target; a tracking system configured to identify, locate, and track the detected target; and a soft kill system configured to perform a countermeasure against the tracked target by interfering with the tracked target, wherein the detection system includes an active detection device and at least one passive detection device.

## Description

### FIELD OF THE INVENTION

The present invention relates to a ground-based air defence systems and methods of performing air defence using a ground-based air defence system.

### BACKGROUND

Ground-based air defence systems typically include an active detection means such as a RADAR detector. The RADAR detector actively detects objects by emitting a RADAR pulse and detecting an object based on reflected pulses that it receives. Once detected, the object can be identified, located, and tracked, using a tracking system. The system also may have a soft kill system to perform a countermeasure against the tracked object by interfering with the tracked target.

It is an aim of the present disclosure to improve on the prior art.

### SUMMARY

Embodiments of the present invention are intended to address the above technical problems.

According to an aspect of the present invention, there is provided a ground-based air defence system comprising: a detection system configured to detect an target; a tracking system configured to identify, locate, and track the detected target; and a soft kill system configured to perform a countermeasure against the tracked target by interfering with the tracked target, wherein the detection system includes an active detection device and at least one passive detection device.

Active detection devices can be detected by the target. Using at least one passive detection device results in the ground-based air defence system being less detectable by the target.

In an embodiment, the active detection device is a RADAR detector.

In an embodiment, the at least one passive detection device is a broadband radio antenna configured to detect transmissions from the target. Similarly, the antenna may be configured to detect unintended electromagnetic emissions from unshielded electronics/power systems.

In an embodiment, the at least one passive detection device is a passive RADAR device. The passive RADAR device may be a passive coherent location passive RADAR device. The passive RADAR device may be a bistatic RADAR device.

In an embodiment, the tracking system comprises an electro-optical sensor configured to capture images of the target in response to the target being detected by the active or passive detection devices.

In an embodiment, the tracking system comprises a laser range finder configured to send a laser ping and determine a distance to the target based on a time of return of the laser ping.

In an embodiment, the laser range finder is bore sighted to the electro-optical sensor.

In an embodiment, the tracking system further comprises an identification and tracking module, the identification and tracking module configured to identify the detected target using the images, and locate and track the detected target using the images and the time of return of laser ping.

In an embodiment, the soft kill system comprises an electronic warfare module configured to transmit a signal to jam at least one RADAR detector of the target.

In an embodiment, the soft kill system comprises a communications disruption module configured to deny communications to the target and/or to spoof communications to the target such that the target interprets the ground-based air defence system to be its controller.

In an embodiment, the soft kill system comprises a global navigation satellite system, GNSS, disruption module configured to deny satellite signals to a GNSS receiver at the target and/or send spoof signals to the GNSS receiver of the target.

In an embodiment, ground-based air defence system further comprises a link to provide targeting information to a hard kill system configured to perform an active countermeasure against the target.

In an embodiment, the hard kill system comprises a gun system wherein the active countermeasure is aiming the gun system at the location of the tracked target.

According to an aspect of the present disclosure, there is provided a method of performing air defence using a ground-based air defence system, the method comprising: detecting a target using a detection system of the ground-based air defence system; identifying, locating, and tracking the detected target using a tracking system of the ground-based air defence system; and performing, by a soft kill system of the ground-based air defence system, a countermeasure against the tracked target by interfering with the tracked target, wherein the detection system includes an active detection device and at least one passive detection device.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 shows a block diagram of a ground-based air defence system, according to one or more embodiments; and
Figure 2 shows a flow chart summarising a method of performing air defence using a ground-based air defence system, according to one or more embodiments.

### DETAILED DESCRIPTION

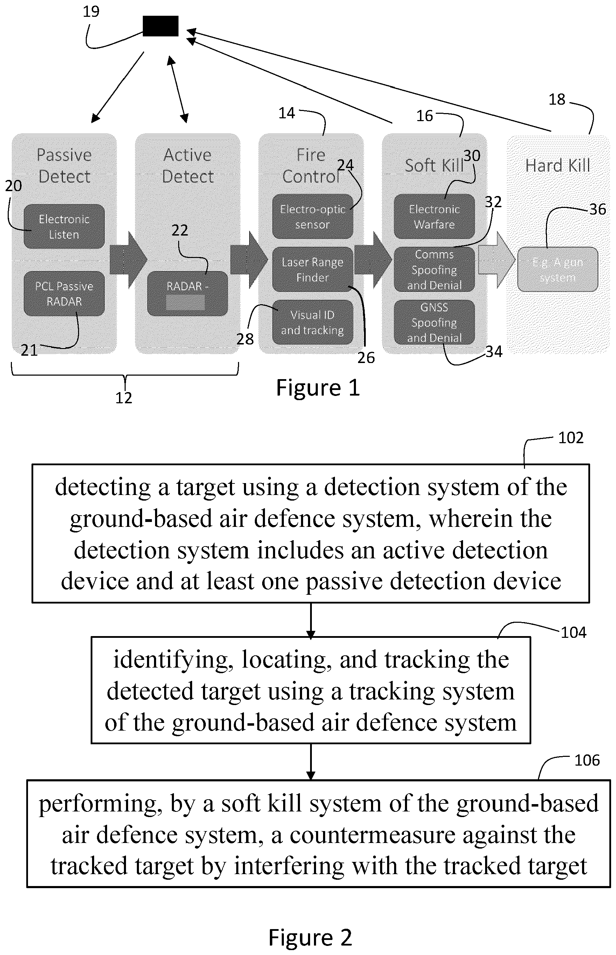

With reference to Figure 1, a ground-based air defence system 10 includes a detection system 12, a tracking system 14, a soft kill system 16, and a hard kill system 18.

The detection system 12 is configured to detect a target 19. The detection system 12 includes at least one passive detection device and an active detection device 22. The active detection device may be a RADAR detector. The RADAR detector may be an active RADAR detector. This means that the RADAR detector sends a RADAR ping and detects objects based on a time of receiving a reflecting RADAR ping from the object.

The at least one passive detection device may be two passive detection devices. A first passive detection device of the two passive detection devices may be an electronic listening device 20. The electronic listening device may be a broadband radio antenna configured to detect transmissions from the target 19. The transmissions may be intentionally transmitted or unintentionally transmitted. Intentional transmissions may include transmissions such as RADAR pings, control signals, or data such as live video, emitted from the target 19. Unintentional transmissions include unintended electromagnetic emissions from unshielded electronics/power systems. This device can detect electromagnetic emissions from a platform and find the direction of the source.

A second passive detection device of the two passive detection devices may be a passive RADAR device 21. The passive RADAR device may be a passive coherent location RADAR device. This radar uses signals of opportunities (i.e. television broadcasts or cellular networks) to find objects.

Overall, the at least one passive detector allows the device to find aerial objects and roughly locate them in space (either direction for electronic listen or approximate 3D location for passive radar) without emitting signals which could be detected by adversarial sensors.

The active detection device includes a typical active RADAR detector. The RADAR detector may detect the target 19 by emitting a RADAR ping and detecting the target 19 based on a time of arrival of a return RADAR ping.

The tracking system 14 may also be called a fire control layer. The tracking system 14 may be configured to identify, locate, and track the detected target 19. In other words, the tracking system 14 allows an object to be positively visually identified, located accurately in a 3D space, and tracked.

The tracking system 14 includes an electro-optic sensor 24. The electro-optic sensor 24 is configured to capture images of the target 19 in response to the target 19 being detected by the active detection device 22.

The tracking system 14 may also comprise a laser range finder 26 configured to send a laser ping and determine a distance to the target 19 based on a time of return of the laser ping. The laser range finder 26 may be bore sighted to the electro-optic sensor 24. In this way, the laser range finder is able to determine a range of the same object as the electro-optic sensor 24.

The tracking system 14 may also comprise an identification and tracking module 28. The identification and tracking module 28 may also be called a visual identification (ID) and tracking module. The identification and tracking module may be configured to identify the detected target 19 using the images, and locate and track the detected target 19 using the images and the time of return of a laser ping.

The soft kill system 16 comprises an electronic warfare module 30 configured to transmit a signal to jam at least one RADAR detector of the target 19.

The soft kill system 16 comprises a communication disruption module 32. The communication disruption module 32 may also be called a communications, or comms, spoofing and denial module. The communication disruption module may be configured to deny communication to the target. This may be achieved by sending sufficient transmissions to the target that the target is unable to identify any signals intended for it from its controller, for example. The communication disruption module may also be configured to spoof communication to the target. This may result in the target 19 interpreting the ground-based air defence system to be its controller.

The soft kill system 16 may comprise a global navigation satellite system, GNSS, disruption module 34. The GNSS disruption module 34 is configured to deny satellite signals to the GNSS receiver at the target 19. In addition, the GNSS disruption module 34 may be configured to send spoof signals to the GNSS receiver of the target 19.

In general, the soft kill system 16 may include a software defined radio or a traditional radio signal generator with waveforms generated by physically configured hardware, a signal generator, a power amplifier and a suitable antenna. This will allow the device to engage targets with the foregoing electronic warfare techniques such as GNSS denial/spoofing and communications denial/spoofing.

Should the system 16 identify a threat which it cannot manage with soft kill then it can pass the target's positional information to the hard kill system 18.

The hard kill system 18 may be a gun system 36 or rocket system. The hard kill system 18 may be configured to perform an active countermeasure against the target. For example, when the hard kill system 18 is a gun system, the countermeasure may be aiming the gun system at the location of the tracked object. Similarly, when the hard kill system 18 is a rocket system, the countermeasure may be aiming the rocket system at the target.

With reference to Figure 2, a method of performing air defence using a ground-based air defence system can be summarized as comprising: detecting 102 a target using a detection system of the ground-based air defence system, wherein the detection system includes an active detection device and at least one passive detection device; identifying, locating, and tracking 104 the detected target using a tracking system of the ground-based air defence system; and performing 106, by a soft kill system of the ground-based air defence system, a countermeasure against the tracked target by interfering with the tracked target.

## Claims

1. A ground-based air defence system comprising:
a detection system configured to detect an target;
a tracking system configured to identify, locate, and track the detected target; and
a soft kill system configured to perform a countermeasure against the tracked target by interfering with the tracked target,
wherein the detection system includes an active detection device and at least one passive detection device.

2. The ground-based air defence system of Claim 1, wherein the active detection device is a RADAR detector.

3. The ground-based air defence system of Claim 1 or Claim 2, wherein the at least one passive detection device is a broadband radio antenna configured to detect transmissions from the target.

4. The ground-based air defence system of any preceding claim, wherein the at least one passive detection device is a passive RADAR device.

5. The ground-based air defence system of any preceding claim, wherein the tracking system comprises an electro-optical sensor configured to capture images of the target in response to the target being detected by the active or passive detection devices.

6. The ground-based air defence system of Claim 5, wherein the tracking system comprises a laser range finder configured to send a laser ping and determine a distance to the target based on a time of return of the laser ping.

7. The ground-based air defence system of Claim 6 when dependent upon Claim 5, wherein the laser range finder is bore sighted to the electro-optical sensor.

8. The ground-based air defence system of Claim 6 or Claim 7, wherein the tracking system further comprises an identification and tracking module, the identification and tracking module configured to identify the detected target using the images, and locate and track the detected target using the images and the time of return of laser ping.

9. The ground-based air defence system of any preceding claim, wherein the soft kill system comprises an electronic warfare module configured to transmit a signal to jam at least one RADAR detector of the target.

10. The ground-based air defence system of preceding claim, wherein the soft kill system comprises a communications disruption module configured to deny communications to the target and/or to spoof communications to the target such that the target interprets the ground-based air defence system to be its controller.

11. The ground-based air defence system of Claim 10, wherein the soft kill system comprises a global navigation satellite system, GNSS, disruption module configured to deny satellite signals to a GNSS receiver at the target and/or send spoof signals to the GNSS receiver of the target.

12. The ground-based air defence system of any preceding claim, further comprising a link to provide targeting information to a hard kill system configured to perform an active countermeasure against the target.

13. The ground-based air defence system of Claim 12, wherein the hard kill system comprises a gun system wherein the active countermeasure is aiming the gun system at the location of the tracked target.

14. A method of performing air defence using a ground-based air defence system, the method comprising:
detecting a target using a detection system of the ground-based air defence system;
identifying, locating, and tracking the detected target using a tracking system of the ground-based air defence system; and
performing, by a soft kill system of the ground-based air defence system, a countermeasure against the tracked target by interfering with the tracked target,
wherein the detection system includes an active detection device and at least one passive detection device.
